Europäisches Patentamt

European Patent Office

Office européen des brevets

(19)

(11) Veröffentlichungsnummer: **0 008 375**
A2

(12) **EUROPÄISCHE PATENTANMELDUNG**

(21) Anmeldenummer: 79102610.7

(22) Anmeldetag: 24.07.79

(51) Int. Cl.³: **G 05 B 9/02**
G 05 D 23/24

(30) Priorität: 24.08.78 DE 2837015

(43) Veröffentlichungstag der Anmeldung:
05.03.80 Patentblatt 80/5

(84) Benannte Vertragsstaaten:
FR GB IT SE

(71) Anmelder: Licentia Patent-Verwaltungs-GmbH
Theodor-Stern-Kai 1
D-6000 Frankfurt/Main 70(DE)

(72) Erfinder: Nutz, Karl-Diether, Dipl.-Ing.
Blumenstrasse 33
D-7101 Oedheim(DE)

(74) Vertreter: Langer, Karl-Heinz (DE)
Hans-Sachs-Strasse 22
D-7100 Heilbronn(DE)

(54) Geberschaltung.

(57) Der Schaltkreis enthält eine spezielle Komparatorschaltung, die mit Hilfe einer Geberschaltung zur Drahtbruchüberwachung im Ist-Wert-Stromkreis der Geberschaltung verwendet wird. In den Stromkreis für den Soll-Wert ist ein Transistor geschaltet, der seinen Steuerstrom aus dem Stromkreis für den Ist-Wert bezieht.

Croydon Printing Company Ltd.

Licentia Patent-Verwaltungs-G.m.b.H.
Theodor-Stern-Kai 1, 6000 Frankfurt 70

Heilbronn, den 03.07.79
SE2-HN-Ma-pi - HN 78/11

## Geberschaltung

Die Erfindung betrifft eine Geberschaltung für eine Schaltimpulse abgebende Steuerschaltung, die zum Vergleich eines der Geberschaltung entnommenen Ist-Wertes mit dem Soll-Wert einen Komparator enthält, wobei der Ist-Wert und der Soll-Wert an je einem einen Spannungsteiler enthaltenden Stromkreis der Geberschaltung abgegriffen wird.

Die erwähnte Steuerschaltung dient beispielsweise zur Ansteuerung eines Zweiweg-Thyristors, über den ein Laststrom geschaltet wird. Die Ansteuerschaltung enthält einen Nulldurchgangsdetektor, der sicherstellt, daß der Laststrom nur während des Nulldurchgangs der Wechselspannung an- bzw. abgeschaltet wird. Die Ansteuerschaltung enthält ferner eine Vollwellenlogik, die gewährleistet, daß zur Steuerung nur Pulspaare verwendet werden, so daß eine Gleichstromkomponente im Lastkreis zuverlässig verhindert wird.

Der in der Ansteuerschaltung enthaltene Komparator löst die An- bzw. Abschaltung des Laststroms durch Vergleich eines Soll-Wertes mit dem Ist-Wert aus. Der Laststrom durchfließt beispielsweise die Heizwicklung einer Herdplatte oder eines Haartrockners. Die Geberschaltung enthält daher ein wärmeempfindliches Thermoelement im Stromkreis für den Ist-Wert.

- 2 -

Es besteht nun die Gefahr, daß im Stromkreis für den Ist-Wert ein Drahtbruch entsteht, der beispielsweise an den dünnen Kontaktierungsdrähten des Thermofühlers relativ häufig auftritt. In diesem Fall bildet der Thermofühler einen extrem hohen Widerstand, was bei Verwendung eines NTC-Widerstands mit negativem Temperaturkoeffizient einer kalten Umgebung entspricht, obgleich der Laststrom möglicherweise ständig durch die Heizwicklung fließt. In diesem Fall werden an der Geberschaltung Ist-Werte abgegriffen, die nicht den tatsächlichen Verhältnissen entsprechen, was zu einer bleibenden Schädigung des gesteuerten Gerätes beispielsweise durch Überhitzung führen kann.

Der Erfindung liegt die Aufgabe zugrunde, eine Geberschaltung anzugeben, die bei einem Drahtbruch im Stromkreis für den Ist-Wert zur Abschaltung des Laststroms führt. Diese Aufgabe wird bei einer Geberschaltung der eingangs beschriebenen Art erfindungsgemäß dadurch gelöst, daß in den Stromkreis für den Soll-Wert ein Transistor geschaltet ist, der seinen Steuerstrom aus dem Stromkreis für den Ist-Wert bezieht.

Bei einem Drahtbruch erhält der Transistor im Stromkreis für den Soll-Wert keinen Steuerstrom mehr und blockiert daher. In diesem Fall verändert sich auch das Soll-Wertpotential in einer Weise, daß bei einem geeigneten Aufbau der Komparatorschaltung ein sicheres Abschalten des Laststroms erfolgt. Der Transistor im Stromkreis für den Soll-Wert ist vorzugsweise ein bipolarer Transistor, dessen Kollektoremitterstrecke in Reihe zu dem den Spannungsteiler für den Soll-Wert bildenden Widerstandspaar geschaltet ist. Der Basisemitterstrecke des Transistors ist ein weiterer Widerstand parallel geschaltet, der seinerseits in Reihe zu dem den Spannungsteiler für den Ist-Wert bildenden Widerstandspaar geschaltet ist.

Die erfindungsgemäße Geberschaltung findet insbesondere Verwendung bei einer Komparatorschaltung, die aus zwei mit einer Vollwellenlogik in Verbindung stehenden Transistoren besteht, wobei die Steuerelektroden dieser Transistoren mit dem Ist- bzw. dem Soll-Wertanschluß der Geberschaltung verbunden sind. Einem dieser Transistoren ist ein weiterer Transistor parallel geschaltet, dessen Steuerelektrode an eine Referenz-Spannungsquelle angeschlossen ist.

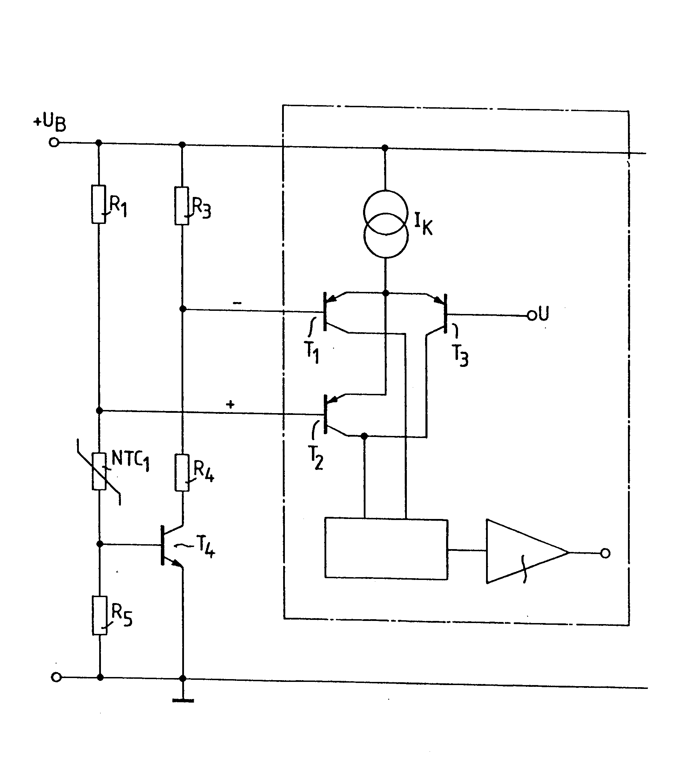

Die Erfindung und ihre weitere vorteilhafte Ausgestaltung soll im folgenden noch anhand eines Ausführungsbeispieles näher erläutert werden. Die Schaltung nach der Figur enthält nur die erfindungswesentlichen Teile, d. h. insbesondere die Geberschaltung in Verbindung mit der Komparatorschaltung der Ansteuerschaltung. Die Ansteuerschaltung enthält, wie bereits erwähnt wurde, außerdem eine Vollwellenlogik in Verbindung mit einem Nulldurchgangsdetektor, sowie eine Verstärkerendstufe und gegebenenfalls weitere Schaltungsteile. Ein Nulldurchgangsdetektor in Verbindung mit einer Vollwellenlogik wird beispielsweise auch bei dem Schaltkreis U 106 BS der Fa. AEG-TELEFUNKEN in bekannter Weise verwendet. Ein Nulldurchgangsdetektor wird außerdem beispielsweise in der DE-OS 25 53 764.8 beschrieben.

Nach der Figur wird die aus den Transistoren $T_1$, $T_2$ und $T_3$ bestehende Komparatorschaltung von einer Konstantstromquelle $I_K$ mit Strom versorgt. Der Komparatorschaltung ist eine Vollwellenlogik-Anordnung mit einem Nulldurchgangsdetektor nachgeschaltet. Der Komparator ist beispielsweise in den Stromzweig des Nulldurchgangsdetektors geschaltet, der nur während einer Halbwelle der Wechselspannung, also beispielsweise in der negativen Halbwelle, Strom führt. Daraus resultiert, daß der Komparator nur

- 4 -

während der negativen Halbwelle eine Zustandsänderung an einem nachgeschalteten Takt-Flipflop der Vollwellen-Logik auslösen kann.

Die Geberschaltung besteht im wesentlichen aus 2 Spannungsteilern, die parallel zueinander zwischen die Pole einer Versorgungs-Gleichspannungsquelle geschaltet sind. Das Widerstandspaar $R_3$, $R_4$ dient zur Einstellung des Soll-Wertes, während an der Verbindung zwischen dem Widerstand $R_1$ und dem Thermofühler $NTC_1$ der Ist-Wert abgegriffen und auf die Komparatorschaltung gegeben wird.

Nach der Erfindung ist in Reihe zu dem Widerstandspaar $R_3$ und $R_4$ die Kollektor-Emitterstrecke eines Transistors $T_4$ geschaltet, dessen Basiselektrode an den Ist-Wert-Stromkreis angeschlossen ist. Die Basis-Emitter-Strecke des Transistors $T_4$ wird vorzugsweise mit einem hochohmigen Widerstand $R_5$, der in Reihe zu dem Thermofühler $NTC_1$ und dem Widerstand $R_1$ geschaltet ist, überbrückt.

Die Verbindung zwischen dem Widerstand $R_1$ und dem Thermofühler $NTC_1$ ist an die Basiselektrode des Transistors $T_2$ angeschlossen, während die Verbindung zwischen den Widerständen $R_3$ und $R_4$ mit der Basiselektrode des Transistors $T_1$ verbunden ist. Parallel zu der Emitter-Kollektor-Strecke des Transistors $T_2$ ist die Emitter-Kollektor-Strecke eines Transistors $T_3$ gleicher Zonenfolge geschaltet. Die Basiselektrode dieses Transistors $T_3$ führt zu einer Referenz-Spannungsquelle. Diese Referenz-Spannung wird vorzugsweise innerhalb der Ansteuerschaltung erzeugt. In einem einfachen Fall handelt es sich beispielsweise um den Spannungsabfall an zwei in Durchlaßrichtung betriebenen Dioden.

Wenn kein Laststrom fließt und damit beispielsweise eine Heizwicklung abkühlt, wird auch der Widerstand des Thermofühlers $NTC_1$ größer. Dadurch wird das Potential zwischen

- 5 -

dem Widerstand $R_1$ und dem Thermofühler $NTC_1$, das am Ist-Wert-Eingang des Transistors $T_2$ anliegt, positiver, und bei einer vorgegebenen Abweichung vom Soll-Wert am Basisanschluß von $T_1$ sperrt der Transistor $T_2$. Ein beispielsweise in der Vollwellenlogik enthaltenes R-S-Flipflop wird dadurch umgeschaltet, und die vom Nulldurchgangsdetektor kommenden Impulse können nun über die Endstufe verstärkt auf einen Triac gegeben werden. Der Triac wird daher durchgeschaltet, und ein Laststrom kann über die Heizwicklung fließen.

Nun fließt ein Laststrom, und der Thermofühler wird in der sich erhitzenden Umgebung niederohmiger. Dadurch wird das Potential am Basisanschluß von $T_2$ zunehmend negativer, bis der Ist-Wert dem Sollwert am Basisanschluß von $T_1$ entspricht. Bei weiter absinkendem Potential am Basisanschluß von $T_2$ wird der Transistor $T_2$ durchgeschaltet und $T_1$ blockiert. Dadurch wird das in der Vollwellenlogik enthaltene R-S-Flipflop umgeschaltet, und die vom Nulldurchgangsdetektor abgegebenen Impulse werden so abgeleitet, daß die Endstufe und damit der Triac keine Schaltimpulse mehr enthält. Damit wird der Laststrom abgeschaltet und die Heizperiode unterbrochen.

Durch den Transistor $T_3$ wird sichergestellt, daß das Speicher-Flipflop auch dann in dem zuletzt erwähnten Zustand bleibt, wenn an beiden Komparator-Eingängen der Transistor $T_1$ und $T_2$ eine Spannung liegt, die positiver ist als die Referenzspannung. In diesem Fall wird ein Einschalten des Laststroms verhindert. Dieser Fall wird dann eintreten, wenn beispielsweise ein Drahtanschluß des Thermofühlers $NTC_1$ bricht und der Strom durch den Ist-Wert-Stromkreis unterbrochen wird. Dann steigt das Potential am Basisanschluß von $T_2$ auf $+ U_B$ an. Zugleich wird jedoch auch der Transistor $T_4$ blockiert, so daß auch das Potential zwischen den Widerständen $R_3$ und $R_4$

- 6 -

und damit am Basisanschluß von $T_1$ gegen + $U_B$ geht. Die beiden Transistoren $T_1$ und $T_2$ haben dann ein Basispotential, das über dem des Transistors $T_3$ liegt. Dann wird der Transistor $T_3$ durchgesteuert, und der Vollwellenlogik wird ein Signal zugeführt, das dem bei durchgesteuertem Transistor $T_2$ entspricht, so daß trotz "kaltem $NTC_1$" keine Steuerimpulse über die Verstärkerendstufe zum Triac gelangen können.

Die erfindungsgemäße Geberschaltung sorgt somit in Verbindung mit dem Transistor $T_3$ in der Komparatorschaltung dafür, daß bei einem Funktionsausfall des Thermofühlers die Heizwicklung bei einem wärmeabgebenden Gerät abgeschaltet bleibt. Es sei darauf hingewiesen, daß sich mit der erfindungsgemäßen Schaltung auch für andere Zwecke Lastströme schalten lassen und anstelle eines Thermofühlers auch andere Bauelemente mit einem veränderlichen Widerstand verwendet werden können. Dabei kann es sich beispielsweise um Hall-Sonden, Magnetdioden, Feldplatten oder beispielsweise um druckempfindliche Bauelemente handeln.

- 1 -

Patentansprüche

1) Geberschaltung für eine Schaltimpulse abgebende Steuerschaltung, die zum Vergleich eines der Geberschaltung entnommenen Ist-Wertes mit dem Soll-Wert einen Komparator enthält, wobei der Ist-Wert und der Soll-Wert an je einem einen Spannungsteiler enthaltenden Stromkreis der Geberschaltung abgegriffen wird, dadurch gekennzeichnet, daß in den Stromkreis für den Soll-Wert ein Transistor ($T_4$) geschaltet ist, der seinen Steuerstrom aus dem Stromkreis für den Ist-Wert bezieht.

2) Geberschaltung nach Anspruch 1, dadurch gekennzeichnet, daß der Transistor ($T_4$) ein bipolarer Transistor ist, dessen Kollektor-Emitterstrecke in Reihe zu dem den Spannungsteiler für den Soll-Wert bildenden Widerstandspaar ($R_3$, $R_4$) geschaltet ist, und daß der Basis-Emitterstrecke ein Widerstand ($R_5$) parallel geschaltet ist, der seinerseits in Reihe zu dem den Spannungsteiler für den Ist-Wert bildenden Widerstandspaar ($R_1$, $NTC_1$) geschaltet ist.

3) Geberschaltung nach Anspruch 1 oder 2, gekennzeichnet durch ihre Anwendung bei einer Komparatorschaltung, die aus zwei, mit einer Vollwellenlogik in Verbindung stehenden Transistoren besteht, wobei die Steuerelektroden dieser Transistoren mit dem Ist- bzw. dem Soll-Wertanschluß der Geberschaltung verbunden sind und einem dieser Transistoren ein weiterer Transistor parallel geschaltet ist, dessen Steuerelektrode an eine Referenzspannungsquelle angeschlossen ist.

4) Geberschaltung nach einem der vorangehenden Ansprüche, gekennzeichnet durch ihre Verwendung zur Drahtbruchüberwachung im Stromkreis für den Ist-Wert.

0008375

1/1